# EUROPÄISCHE PATENTSCHRIFT

(11) **EP 1 039 332 B1**
(45) Veröffentlichungstag und Bekanntmachung des Hinweises auf die Patenterteilung: **29.06.2011**
(21) Anmeldenummer: 99105657.3
(22) Anmeldetag: 19.03.1999
(51) Int. Cl.: G02F 1/133, B60K 37/02

(54) **Anzeigeeinrichtung**
Display device
Dispositif d'affichage

(43) Veröffentlichungstag der Anmeldung: 27.09.2000
(73) Patentinhaber: Continental Automotive GmbH, 30165 Hannover (DE)
(72) Erfinder: Brandt, Peter, 63739 Aschaffenburg (DE); Tippl, Dietmar, 65779 Kelkheim (DE)

(56) Entgegenhaltungen:
- EP-A- 0 024 483
- DE-A- 4 140 415
- US-A- 4 952 783

## Beschreibung

Die Erfindung betrifft eine Anzeigeeinrichtung, insbesondere für ein Fahrzeug, mit einem eine Flüssigkristallzelle aufweisenden Bildschirm, wobei die Flüssigkristallzelle eine vordere und eine hintere Zellenwand und eine in dem Zellenraum zwischen diesen Zellenwänden angeordnete Flüssigkristallsubstanz aufweist, und mit einer Heizvorrichtung, mittels welcher die Anzeigeeinrichtung beheizbar ist.

Bei Flüssigkristallzellen, die zumindest zeitweise bei niedrigen Umgebungstemperaturen betrieben werden, wie es z. B. bei Anzeigen in Fahrzeugen der Fall ist, tritt das Problem auf, daß bei tiefen Temperaturen die Schaltzeiten der Flüssigkristallzellen unerwünscht groß werden, so daß damit ausgestattete Anzeigen eine erhebliche Trägheit annehmen. Um diesem Mißstand abzuhelfen, ist es bekannt, einen der Beleuchtung einer Flüssigkristallzelle in einer Flüssigkristallanzeige dienenden Lichtkasten mit einem Heizdraht zu versehen. Mittels des Heizdrahts wird die Flüssigkristallzelle erwärmt und auf einem Temperaturniveau gehalten, das es trotz niedriger Umgebungstemperaturen ermöglicht, die Flüssigkristallanzeige mit den erforderlichen kurzen Schaltzeiten betreiben zu können. Aufgrund des relativ großen Abstands zwischen Heizdraht und Flüssigkristallzelle ist eine hohe Energiezufuhr und eine starke Aufheizung des Heizdrahts notwendig, um die erforderliche Erwärmung der Flüssigkristallzelle erzeugen zu können. Darüber hinaus erwärmt der Heizdraht aufgrund seiner Anordnung in dem Lichtkasten und seiner erforderlichen hohen Wärmeabstrahlung in unerwünschter Weise die gesamte Anzeigeeinheit.

Die US 4,773,735 A beschreibt eine LCD mit Heizvorrichtung mit den Merkmalen des Oberbegriffs des Anspruchs 1.

Die JP 02055322 A (Abstract) beschreibt eine LCD, bei der die Heizvorrichtung isoliert innerhalb der Zelle angeordnet ist.

Aufgabe der Erfindung ist es, die gattungsgemäße Anzeigeeinrichtung zu verbessern. Diese Aufgabe wird durch eine Anzeigeeinrichtung mit den Merkmalen des Anspruchs 1 gelöst.

Durch den Betrieb der Heizvorrichtung mit einer Wechselspannung ist eine hohe Dauerhaltbarkeit und Betriebssicherheit der Anzeigeeinrichtung sichergestellt. Beim Anlegen einer Gleichspannung an eine Heizung einer beheizbaren Flüssigkristallzelle würde zwischen den Kontaktierungspunkten eine Potentialdifferenz entstehen; die sich in einem direkten Kontakt mit der Heizvorrichtung befindende Flüssigkristallschicht würde dann einer permanenten Gleichspannung ausgesetzt. Dies führt je nach Höhe der Gleichspannung bzw. des Glelchspannungsantells einer Wechselspannung kurz- bis mittelfristig zu einer irreversiblen Zersetzung des Flüssigkristalls und reduziert somit die Lebensdauer und Zuverlässigkeit der Anzelgevorrichtung in nicht vertretbarem Ausmaß. Durch die erfindungsgemäße Nutzung einer Wechselspannung zur Ansteuerung der Heizvorrichtung, wobei im Rahmen mit vertretbarem Aufwand nicht zu vermeidender Toleranzen ein geringer Gleichspannungsanteil vorhanden ist, wird vorbeschriebenen Zersetzungseffekten wirkungsvoll entgegengetreten, so daß sich die erfindungsgemäße Anzeigevorrichtung durch eine sehr hohe Haltbarkeit und Klarheit der Anzeige auszeichnet.

Durch die direkte Zuordnung der Heizvorrichtung zu der Flüssigkristallsubstanz und das Fehlen einer thermisch isolierenden Schicht sind die Aufwärm- und Schaltzeiten der Anzeigeeinrichtung besonders gering. Daher - und wegen der oben beschriebenen hohen Betriebssicherheit - eignet sich die erfindungsgemäße Anzelgeeinrichtung Insbesondere auch als Tachometeranzeige in einem Kraftfahrzeug. Bei einem Tachometer sind kurze Ansprechzeiten und eine sofortige Betriebsfähigkeit sowie eine uneingeschränkte Zuverlässigkeit besonders wichtig, da die Anzeige der gefahrenen Geschwindigkeit von hoher Bedeutung für die Verkehrssicherheit ist.

Die Anzeigeeinheit ist besonders einfach und kostengünstig im Aufbau, wenn die Flüssigkristallzelle vorzugsweise eine TN- oder STN-Zelle ist.

Die Herstellungskosten der Anzeigeeinheit können gesenkt werden, da die Heizvorrichtung eine elektrisch leitende Schicht aufweist. Bei einer Bestromung kann diese Schicht dann als Widerstandsheizung funktionieren. Man könnte sich vorstellen, die elektrische leitende Schicht der Flüssigkristallsubstanz unmittelbar benachbart anzuordnen.

Jedoch ist es für eine einfache Schaltung der Flüssigkristalle mit einem möglichst geringen Energieaufwand von besonderem Vorteil, wenn die elektrisch leitende Schicht zwischen einer Front- und/oder einer Rückelektrode der Flüssigkristallzelle und der vorderen und/oder hinteren Zellenwand angeordnet ist.

Die Herstellung der Flüssigkristallzelle ist einfach, da die elektrisch leitende Schicht in einer Ebene mit einer Front- und/oder einer Rückelektrode der Flüssigkristallzelle angeordnet ist. Damit kann die elektrisch leitende Schicht in einem Arbeitsgang mit einer Elektrode der Flüssigkristallzelle aufgebracht werden.

Die Heizwirkung ist besonders gut, wenn die elektrisch leitende Schicht mäanderförmig verläuft. Es ist auch denkbar, die elektrisch leitende Schicht nur in den Bereichen anzuordnen, in denen schaltbare Anzeigeelemente vorhanden sind. Somit kann der Einsatz zum Heizen benötigter elektrischer Energie weiter gesenkt werden, da eine Erwärmung von Bereichen der Flüssigkristallzelle, die nicht geschaltet werden und damit auch keinem negativen Einfluß niedriger Umgebungstemperaturen unterliegen, vermieden wird.

Insbesondere bei eine Flüssigkristallzelle aufweisenden Punkt-Matrix-Displays ist es üblich, daß die Flüssigkristallzelle eine Front- und eine Rückelektrode mit jeweils Scharen von zueinander parallelen Elektrodenstreifen aufweist, wobei die Elektrodenstreifen der Front- und der Rückelektrode kreuzweise zueinander angeordnet sind. Um bei solchen Flüssigkristallzellen eine gute und flächendeckende Heizwirkung zu erzielen, ist es erfindungsgemäß vorgesehen, daß die Elektrode, in deren Ebene die elektrisch leitende Schicht angeordnet ist, streifenförmig ist und dass in Zwischenräumen der Streifen längliche Abschnitte der elektrisch leitenden Schicht angeordnet sind.

Um eine die Kontaktierung der streifenförmigen Elektroden nicht störende Verbindung der länglichen Abschnitte der elektrisch leitenden Schicht zu erreichen, verbinden erfindungsgemäß die Ebene der Frontelektrode und die Ebene der Rückelektrode verbindende Durchkontaktierungen die länglichen Abschnitte der elektrisch leitenden Schicht mittels Verbindungsabschnitten elektrisch miteinander.

Üblicherweise bestehen die Elektroden von Flüssigkristallzellen aus Indium-Zinn-Oxyd. Die Herstellung einer erfindungsgemäßen Anzeigeeinrichtung wird daher wesentlich vereinfacht, wenn die elektrisch leitende Schicht Indium-Zinn-Oxyd aufweist, so daß bei der Herstellung der Flüssigkristallzelle kein zusätzlicher Werkstoff gehandhabt und verarbeitet werden muß.

Gemäß einer anderen vorteilhaften Weiterbildung der Erfindung wird die Funktionssicherheit der Anzeigeeinrichtung dadurch gesteigert, daß die elektrisch leitende Schicht mit einer elektrischen Isolationsschicht abgedeckt ist. Vorteilhaft weist die Isolationsschicht Glas auf. Dieses kann z. B. als Glaspulver aufgebracht und aufgesintert oder eingeschmolzen sein.

Um Energieverluste möglichst gering zu halten, ist gemäß einer vorteilhaften Weiterbildung der Erfindung die die Heizvorrichtung betreibende Wechselspannung unmittelbar an die elektrisch leitende Schicht anlegbar.

Insbesondere für eine Durchlichtbeleuchtung des Bildschirms ist es von besonderem Vorteil, wenn die elektrisch leitende Schicht lichtdurchlässig ist. Damit wird das von einer zur Beleuchtung dienenden Lichtquelle ausgesandte Licht zu einem sehr großen Teil genutzt, ohne daß es zu nennenswerten Lichtverlusten oder einer uneinheitlichen Ausleuchtung des Bildschirms kommt, wie es bei einer Verwendung von z. B. Heizdrähten, die zu einer Schattenbildung führen, der Fall wäre.

Wenn gemäß einer vorteilhaften Weiterbildung der Erfindung die vordere und/oder die hintere Zellenwand eine Glasplatte ist, dann wird sowohl eine Durchlichtbeleuchtung des Bildschirms (wenn beide Zellenwände Glasplatten sind) als auch eine einfache und kostengünstige Herstellung der Flüssigkristallzelle ermöglicht. Flüssigkristallbildschirme können auch durch auf sie von der Vorderseite her auffallendes Umgebungs- und/oder Flutlicht beleuchtet werden. Dafür ist ein in einem hinteren Bereich oder hinter der Flüssigkristallzelle angeordneter Reflektor notwendig, der das einfallende Licht umlenkt und die angesteuerten Bereiche der Flüsslgkrlstallzelle für einen Betrachter sichtbar macht. Es ist daher besonders vorteilhaft, wenn die Heizvorrichtung lichtreflektierend ist, so daß sie die Aufgabe vorgenannten Reflektors übernehmen kann.

Gemäß einer vorteilhaften Weiterbildung der Erfindung ist die Heizvorrichtung ein Transflektor, der auf die Vorderseite der Heizvorrichtung auftreffendes Licht teilweise reflektiert und auf die Rückseite auftreffendes Licht teilweise reflektiert. Damit kann die Anzeigeeinheit bei hinreichender Umgebungshelligkeit ohne eine zusätzliche Lichtquelle abgelesen werden, wohingegen bei Umgebungsdunkelheit eine hinter der Flüssigkristallzelle angeordnete Lichtquelle zur Sichtbarmachung der Anzeige zugeschaltet werden kann.

Von besonderem Vorteil ist es, wenn der Bildschirm zwei hintereinander angeordnete Flüssigkristallzellen aufweist, wodurch eine unerwünschte Farbwirkung der Flüssigkristallzelle kompensiert werden kann. Dafür ist es ausreichend, wenn eine der Zellen aktiv angesteuert wird und die andere Zelle lediglich passiv betrieben wird, wobei in beiden Zellen die gleiche Flüssigkristallsubstanz vorhanden ist. Es ist jedoch auch denkbar, zwei hintereinander geschaltete aktive Zellen zu verwenden, wodurch eine Darstellung sich überlagernder Informationen ermöglicht ist.

Vorzugsweise sind beide Flüssigkristallzellen TN- oder STN-Zellen. Die Notwendigkeit der Farbkompensation tritt insbesondere bei STN-Zellen auf. Zwei hintereinander angeordnete STN-Zellen, wobei eine der Zellen aktiv und die andere passiv betrieben wird, sind unter dem Namen DSTN-Zelle bekannt.

Man könnte sich vorstellen, in lediglich einer der hintereinander angeordneten Flüssigkristallzellen eine Heizvorrichtung vorzusehen. Um die Flüssigkristallsubstanz in beiden Zellen erwärmen zu können, ist dann jedoch eine hohe Heizleistung notwendig. Darüber hinaus wird die der Heizvorrichtung entferntere Flüssigkristallsubstanz ein niedrigeres Temperaturniveau aufweisen als die der Heizvorrichtung unmittelbar zugeordnete Flüssigkristallsubstanz. Aufgrund der ungleichmäßigen Erwärmung der beiden Substanzen kann es zu zusätzlichen unerwünschten Farbeffekten kommen. Daher ist es von besonderem Vorteil, wenn jede der Flüssigkristallzellen eine Heizvorrichtung aufweist.

Man könnte sich vorstellen, daß die gesamte Fläche der Flüssigkristallzelle als Darstellungsbereich für eine Anzeige genutzt wird. In vielen Fällen ist jedoch lediglich ein Teilbereich der Flüssigkristallzelle als Darstellungsbereich vorgesehen, und die anderen Bereiche der Zelle sind von einer Blende abgedeckt. Dann ist es vorteilhaft, wenn - die Erkennbarkeit der Anzeige nicht störend - die Heizvorrichtung außerhalb des Darstellungsbereichs der Flüssigkristallzelle angeordnet ist.

Gemäß einer anderen vorteilhaften Weiterbildung der Erfindung ist in dem Zellenraum der Flüssigkristallzelle ein Temperatursensor angeordnet. Damit kann in einfacher Weise über eine externe elektronische Schaltung eine den Temperaturverhältnissen in der Flüssigkristallzelle entsprechende bedarfsgerechte Ein- und Ausschaltung der Heizvorrichtung erfolgen.

In einer zwei optisch in Reihe angeordnete Flüssigkristallzellen aufweisenden DSTN-Zelle kann eine der Flüssigkristallzellen als aktive Zelle zur Darstellung einer Anzeige und die andere Flüssigkristallzelle als passive Zelle zur Farbkompensation vorgesehen sein. Dabei ist es gemäß einer anderen Weiterbildung der Erfindung von besonderem Vorteil, wenn der Bildschirm eine DSTN-Zelle mit einer aktiven Flüssigkristallzelle und mit einer passiven Flüssigkristallzelle aufweist, wobei die Heizvorrichtung in der passiven Flüssigkristallzelle angeordnet ist. Auf diese Weise ist sichergestellt, daß die Heizvorrichtung keine störenden Einflüsse auf die elektrische Ansteuerung der anzeigenden Flüssigkristallzelle ausübt.

Vorzugsweise weist dabei die passive Flüssigkristallzelle eine Frontelektrode und eine Rückelektrode auf und sind die Front- und die Rückelektrode derart mit einer Spannung beaufschlagbar, daß auf dem Bildschirm entweder helle Zeichen vor dunklem Hintergrund (Negativdarstellung) oder dunkle Zeichen vor hellem Hintergrund (Positivdarstellung) darstellbar sind. So ist ohne zusätzlichen baulichen Aufwand die - in Abhängigkelt z. B. von der Umgebungshelligkeit - jeweils besser ablesbare Darstellungweise wählbar.

Bei der Erzeugung einer Wechselspannung läßt sich in der Regel ohne hohen technischen Aufwand ein zumindest geringer Gleichspannungsanteil aus Toleranzgründen nicht vermeiden. Deshalb ist erfindungsgemäß die Anzeigevorrichtung besonders kostengünstig und dennoch präzise und weist eine hohe Haltbarkeit auf, da die die Heizvorrichtung betreibende Wechselspannung einen Gleichspannungsanteil von nicht mehr als 100 mV aufweist. Dieser geringe Gleichspannungsanteil führt noch nicht zu einer unerwünschten Zersetzung der Flüssigkristallsubstanz.

Die Erfindung wird im folgenden anhand der beigefügten Zeichnungen näher erläutert. Dabei zeigt
- Figur 1: eine nicht erfindungsgemäße Flüssigkristallzelle mit einer Heizvorrichtung in einer Schnittansicht,
- Figur 2: eine nicht erfindungsgemäß DSTN-Zelle mit Heizvorrichtun- gen in einer Schnittansicht,
- Figur 3: eine nicht erfindungsgemäße Rückelektrode einer weiteren Flüssigkristallzelle in einer Vorderansicht,
- Figur 4: eine erfindungsgemäße vordere und eine hintere Wand des Ausführungsbeispiels der Flüssigkristallzelle in perspektivischer Ansicht und
- Figur 5: einen vereinfachten Schaltplan zum Ansteuern einer Flüs- sigkristallzelle.

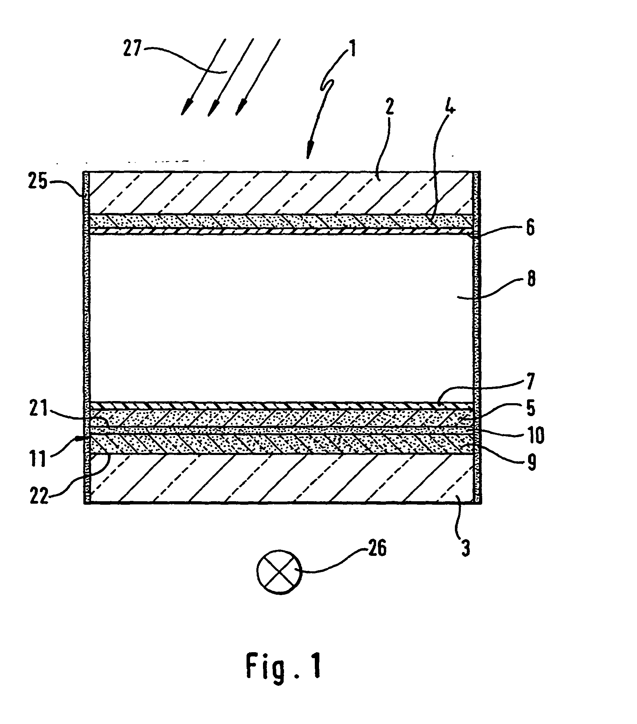

Eine in Figur 1 gezeigte Flüssigkristallzelle 1, die z. B. Bestandteil eines Punkt-Matrix-Bildschirms sein kann, weist eine vordere Wand 2 und eine hintere Wand 3 auf. Sowohl die vordere Wand 2 als auch die hintere Wand 3 werden von Glasplatten gebildet. Auf die Rückseite der vorderen Wand 2 ist eine Frontelektrode 4 z. B. aus Indium-Zinn-Oxyd aufgebracht, die von einer elektrischen Isolationsschicht 6 bedeckt wird.

Unmittelbar an der Vorderseite der hinteren Wand 3 und somit an einer Innenwandung der Flüssigkristallzelle 1 ist eine Heizvorrichtung 11 angeordnet. Die Heizvorrichtung 11 besteht aus einer auf die hintere Wand aufgebrachten Heizschicht 9 aus z. B. Indium-Zinn-Oxyd, die mittels einer Isolationsschicht 10 aus z. B. Glaspulver elektrisch isoliert wird. Auf die Isolationsschicht 10 der Heizvorrichtung 11 ist eine Rückelektrode 5, die ebenfalls aus Indium-Zinn-Oxyd bestehen kann, aufgetragen und mit einer Isolationsschicht 7 abgeschlossen.

Zwischen der Frontelektrode 4 und der Rückelelektrode 5 ist - von diesen durch die Isolationsschichten 6, 7 getrennt - eine Flüssigkristallsubstanz 8 angeordnet. Die Lichtdurchlässigkeit der Flüssigkristallsubstanz 8 ist zwischen einzelnen Segmenten der Frontelektrode 4 und der Rückelektrode 5 schaltbar. Mittels einer Verklebung 25 sind sowohl die vordere Wand 2 und die hintere Wand 3 der Flüssigkristallzelle 1 miteinander verbunden als auch die Flüssigkristallsubstanz 8 innerhalb der Zelle gesichert.

Mittels einer hinter der Flüssigkristallzelle 1 angeordneten Lichtquelle 26 wird die Zelle beleuchtet. Dazu ist die Heizvorrichtung 11 für auf ihre Rückseite 22 auftreffendes Licht durchlässig. Auf die Vorderseite 21 der Heizvorrichtung 11 auftreffende Lichtstrahlen, z. B. von Umgebungslicht 27, können an der Vorderseite 21 der Heizvorrichtung 11 reflektiert werden und so zur Sichtbarmachung der geschalteten Bereiche der Flüssigkristallsubstanz 8 beitragen.

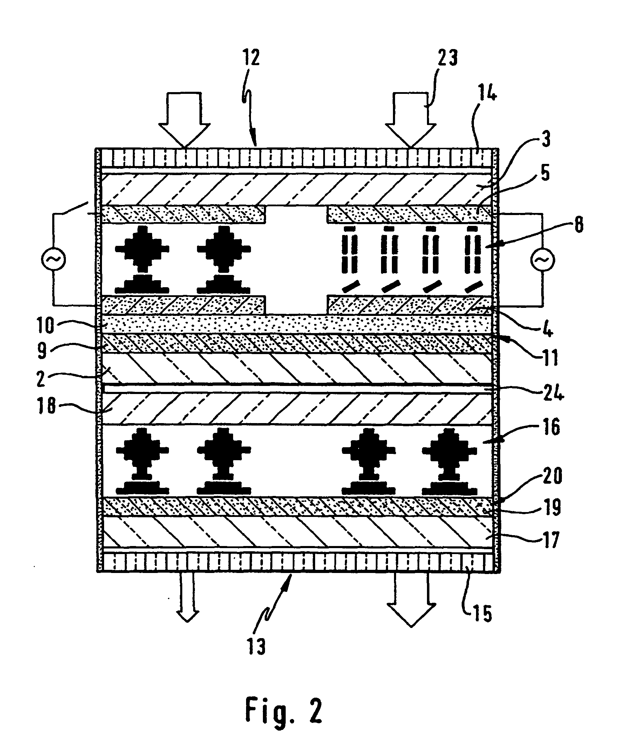

In Figur 2 ist eine DSTN-Zelle, die aus zwei hintereinander angeordneten Flüssigkristallzellen 12 und 13 besteht, dargestellt. Gleiche Bauteile sind dabei - wie auch in den folgenden Figuren - jeweils mit gleichen Bezugszeichen versehen.

An der Rückseite der Füssigkristallzelle 12 ist ein Polarisator 14 und an der Vorderseite der Flüssigkristallzelle 13 ein Polarisator 15 angeordnet. Eine vordere Wand 2 und eine hintere Wand 3 der Flüssigkristallzelle 12 wird ebenso wie eine vordere Wand 17 und eine hintere Wand 18 der Flüssigkristallzelle 13 jeweils von einer Glasplatte gebildet. Zwischen den Wänden 2 und 18 ist ein schmaler Luftspalt 24 angeordnet.

Die Flüssigkristallzelle 13 ist eine passive Zelle, die lediglich einer Kompensation eines unerwünschten Farbeffekts dient. Eine Flüssigkristallsubstanz 16 der Zelle 13 ist daher schematisch in nicht angesteuertem Zustand eingezeichnet. Hingegen ist die Flüssigkristallzelle 12 eine aktive Zelle. Eine zwischen Abschnitten einer Frontelektrode 4 und Abschnitten einer Rückelektrode 5 angeordnete Flüssigkristallsubstanz 8 ist im rechten Bereich der Darstellung der Figur 2 angesteuert eingezeichnet, was durch die symbolisch eingezeichnete angelegte Wechselspannung verdeutlicht wird. Im linken Bereich der Zelle 12 angeordnete Flüssigkristallsubstanz liegt hingegen in nicht angesteuertem Zustand vor.

Sowohl die aktive Flüssigkristallzelle 12 als auch die passive Flüssigkristallzelle 13 sind jeweils mit einer Heizvorrichtung 11 bzw. 20 versehen. Die Heizvorrichtung 20 besteht aus einer auf die vordere Wand 17 der Zelle 13 aufgetragenen Heizschicht 19. Da die Zelle 13 nicht angesteuert wird, ist eine zusätzliche elektrische Isolationsschicht auf der Heizschicht 19 nicht notwendig. Hingegen ist eine auf die vordere Wand 2 der Zelle 12 aufgetragene Heizschicht 9 mit einer Isolationsschicht 10 versehen, wodurch eine elektrische Entkopplung der Heizvorrichtung 11 von der Frontelektrode 4 erreicht wird.

Eine Beleuchtung der Flüssigkristallzellen 12, 13 erfolgt mittels einer Durchlichtbeleuchtungseinrichtung, die durch Pfeile 23 symbolisiert wird, wobei an den eine gleiche Breite aufweisenden Pfeilen im rechten Bereich der Darstellung der Figur 2 zu erkennen ist, daß der angesteuerte Zellenbereich lichtdurchlässig ist, wohingegen der nicht angesteuerte Zellenbereich den Lichtdurchgang sperrt (vgl. unterschiedliche Pfeilbreiten im linken Bereich der Darstellung der Figur 2).

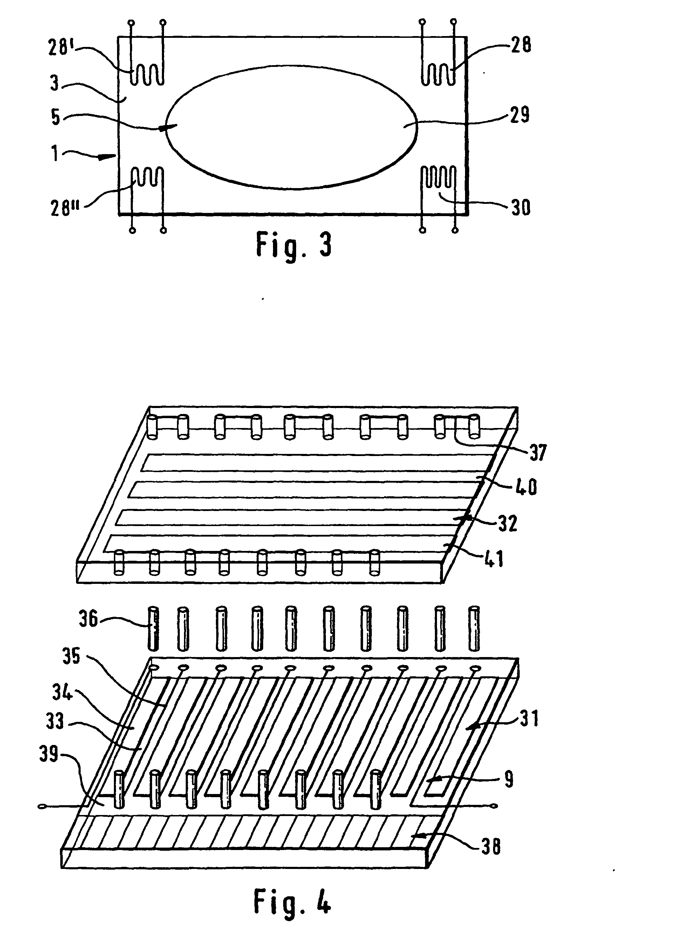

In Figur 3 ist eine hintere Wand 3 mit einer Rückelektrode 5 einer Flüssigkristallzelle 1 dargestellt, die zur Anzeige von Informationen in einem ovalen Darstellungsbereich 29 ausgebildet ist. Außerhalb des Darstellungsbereichs 29 gelegene Bereiche der Flüssigkristallzelle 1 sind von einer hier nicht dargestellten Blende abgedeckt. Die Flüssigkristallzelle 1 kann z. B. zur Anzeige der Fahrgeschwindigkeit eines Kraftfahrzeugs dienen und in einer Armaturentafel oder einem Kombinationsinstrument des Fahrzeugs eingebaut sein. In drei Eckbereichen der rechteckigen, von einer Glasplatte gebildeten hinteren Wand 3 sind Heizvorrichtungen 28, 28', 28" in derselben Ebene wie die Rückelektrode 5 angeordnet. In dem vierten Eckbereich der hinteren Wand 3 befindet sich in der Ebene der Heizvorrichtungen 28, 28', 28" und der Rückelektrode 5 ein Temperatursensor 30. Der Temperatursensor 30 bewirkt über eine externe, hier nicht dargestellte elektrische Schaltung ein Ein- und Ausschalten der Heizvorrichtungen 28, 28', 28", so daß der Zelleninnenraum der Flüssigkristallzelle 1 auf einer optimalen Betriebstemperatur gehalten wird.

Eine jeweils von Glasplatten gebildete vordere Wand 39 und hintere Wand 40 einer Flüssigkristallzelle eines Punkt-Matrix-Displays des Ausführungsbeispiels zeigt Figur 4. Die vordere Wand 39 weist neben einer streifenförmig ausgebildeten Frontelektrode 31 einen Anschlußbereich 38 zur elektrischen Kontaktierung auf. Zwischen Streifen 34 der Frontelektrode 31 sind in Zwischenräumen 33 längliche Abschnitte 35 einer Heizvorrichtung 9 angeordnet. Senkrecht zu den Streifen 34 der Frontelektrode 31 befinden sich auf der hinteren Wand 40 Streifen 41 einer Rückelektrode 32. Durchkontaktierungen 36 zwischen den länglichen Abschnitten 35 der Heizvorrichtung 9 auf der vorderen Wand 39 und Verbindungsabschnitten 37 auf der hinteren Wand 40 bewirken eine durchgehende elektrische Verbindung innerhalb der Heizvorrichtung 9.

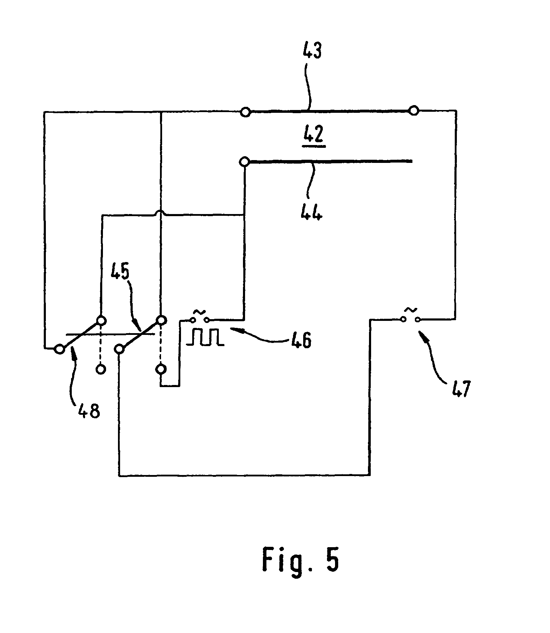

Von einer DSTN-Zelle, die eine aktive Flüssigkristallzelle zur Informationsdarstellung und eine passive Flüssigkristallzelle für eine Positiv-/Negativ-Umschaltung einer Anzeigevorrichtung aufweist, ist in Figur 5 vereinfacht die passive Flüssigkristallzelle 42 mit einer Frontelektrode 43 und einer Rückelektrode 44 dargestellt. Es ist erkennbar, daß mittels eines Umschalters 45 wahlweise über eine Energieversorgung 46 (Wechselspannungsquelle) die Elektroden 43, 44 der Flüssigkristallzelle 42 mit einer Treiber-Spannung (Umschalter 45 in gestrichelt dargestellter Position) oder die Frontelektrode 43 mit einer Heizspannung einer Energieversorgung 47 (Wechselspannungsquelle) (Umschalter 45 in durchgezogen dargestellter Position) beaufschlagbar sind/ist. Mit der Treiber-Spannung erfolgt eine Positiv-/Negativ-Umschaltung der DSTN-Zelle; diese Umschaltung ist nur bei abgeschalteter Heizung möglich. Die Heizvorrichtung wird in diesem Ausführungsbeispiel von der Frontelektrode 43 gebildet.

Mit dem Umschalter 45 ist ein Umschalter 48 in der Weise gekoppelt, daß mit einem Umlegen des Umschalters 45 gleichzeitig ein Umlegen des Umschalters 48 erfolgt. Der Umschalter 48 bewirkt bei eingeschalteter Heizung (Umschalter 45 und Umschalter 48 in durchgezogen dargestellter Position) ein Kurzschließen der Frontelektrode 43 und der Rückelektrode 44. Dadurch wird bei an der Frontelektrode 43 anliegender Heizspannung eine Potentialdifferenz zwischen Frontelektrode 43 und Rückelektrode 44, die zu einer Zerstörung der (hier nicht dargestellten) zwischen den Elektroden 43, 44 angeordneten Flüssigkristallsubstanz führen könnte, vermieden.

Bei der Beaufschlagung der Elektroden 43, 44 mit der Treiber-Spannung (Umschalter 45 in gestrichelt dargesteller Position) ist der Umschalter 48 geöffnet (gestrichelt dargestellte Position).

## Patentansprüche

1. Anzeigeeinrichtung, insbesondere für ein Fahrzeug, mit einem eine Flüssigkristallzelle aufweisenden Bildschirm, wobei die Flüssigkristallzelle eine vordere und eine hintere Zellenwand und eine in dem Zellenraum zwischen diesen Zellenwänden angeordnete Flüssigkristallsubstanz aufweist, und mit einer Heizvorrichtung, mittels welcher die Anzeigeeinrichtung beheizbar ist, wobei die Heizvorrichtung (11; 20; 28) in dem Zellenraum der Flüssigkristallzelle (1; 12, 13; 42) unmittelbar oder mittelbar auf der vorderen (2; 17; 39) und/oder der hinteren (3; 18; 40) Zellenwand angeordnet ist, wobei die die Heizvorrichtung (11; 20; 28)
betreibende Wechselspannung einen Gleichspannungsanteil von nicht mehr als 100 mV aufweist.

2. Anzeigeeinrichtung nach Anspruch 1, **dadurch gekennzeichnet, daß** die Flüssigkristallzelte (1; 12, 13; 42) eine TN- oder STN-Zelle ist,
wobei die Heizvorrichtung (11; 20; 28) eine elektrisch leitende Schicht (9; 19) aufweist,
die in einer Ebene mit einer Front-(4) und/oder einer Rückelektrode (5) der Flüssigkristallzelle (1; 12) angeordnet ist,
wobei die Elektrode (31), in deren Ebene die elektrisch leitende Schicht (9) angeordnet ist, streifenförmig ist und in Zwischenräumen (33) der Streifen (34) längliche Abschnitte (35) der elektrisch leitenden Schicht (9) angeordnet sind
**dadurch gekennzeichnet, dass**
die Ebene der Frontelektrode (31) und die Ebene der Rückelektrode (32) verbindende Durchkontaktierungen (36) die länglichen Abschnitte (35) der elektrisch leitenden Schicht (9) mittels Verbindungsabschnitten (37) elektrisch miteinander verbinden,
daß die Anzeigeeinrichtung eine Wechselspannungsquelle (47) aufweist, die die Heizvorrichtung in Form der elektrisch leitenden Schicht (9) betreibt

3. Anzeigeeinrichtung nach Anspruch 1 oder 2, **dadurch gekennzeichnet, daß** die elektrisch leitende Schicht (9; 19) zwischen einer Front- (4) und/oder einer Rückelektrode (5) der Flüssigkristallzelle (1; 12) und der vorderen (2) und/oder hinteren (3) Zellenwand angeordnet ist.

4. Anzeigeeinrichtung nach einem der Ansprüche 1 bis 3, **dadurch gekennzeichnet, daß** die elektrisch leitende Schicht (9; 19) mäanderförmig verläuft.

5. Anzeigeeinrichtung nach einem der Ansprüche vorstehenden, **dadurch gekennzeichnet, daß** die elektrisch leitende Schicht (9; 19) Indium-Zinn-Oxyd aufweist.

6. Anzelgeeinrtchtung nach einem der Ansprüche vorstehenden, **dadurch gekennzeichnet, daß** die elektrisch leitende Schicht (9) mit einer elektrischen Isolationsschicht (10) abgedeckt ist.

7. Anzeigeeinrichtung nach Anspruch 6, **dadurch gekennzeichnet, daß** die Isolationsschicht (10) Glas aufweist.

8. Anzeigeeinrichtung nach einem der Ansprüche vorstehenden, **dadurch gekennzeichnet, daß** die elektrisch leitende Schicht (9; 19) lichtdurchlässig ist.

9. Anzeigeeinrichtung nach einem der vorhergehenden Ansprüche, **dadurch gekennzeichnet, daß** die vordere (2; 17; 39) und/oder die hintere (3; 18; 40) Zellenwand eine Glasplatte ist.

10. Anzeigeeinrichtung nach einem der vorhergehenden Ansprüche, **dadurch gekennzeichnet, daß** die Heizvorrichtung (11) lichtreflektierend ist.

11. Anzeigeeinrichtung nach Anspruch 10, **dadurch gekennzeichnet, daß** die Heizvorrichtung (11) ein Transflektor ist, der auf die Vorderseite (21) der Heizvorrichtung (11) auftreffendes Licht reflektiert und auf die Rückseite (22) auftreffendes Licht durchläßt.

12. Anzeigeeinrichtung nach einem der vorhergehenden Ansprüche, **dadurch gekennzeichnet, daß** der Bildschirm zwei hintereinander angeordnete Flüssigkristallzellen (12, 13) aufweist.

13. Anzeigeeinrichtung nach Anspruch 12, **dadurch gekennzeichnet, daß** beide Flüssigkristallzellen (12, 13) TN- oder STN-Zellen sind.

14. Anzeigeeinrichtung nach Anspruch 11 oder 12, **dadurch gekennzeichnet, daß** jede der Flüssigkristallzellen (12, 13) eine Heizvorrichtung (11, 20) aufweist.

15. Anzeigeeinrichtung nach einem der vorhergehenden Ansprüche, **dadurch gekennzeichnet, daß** die Heizvorrichtung (28) außerhalb eines Darstellungsbereichs (29) der Flüssigkristallzelle (1) angeordnet ist.

16. Anzeigeeinrichtung nach einem der vorhergehenden Ansprüche, **dadurch gekennzeichnet, daß** in dem Zellenraum der Flüssigkristallzelle (1; 12, 13; 42) ein Temperatursensor (30) angeordnet ist.

17. Anzeigeeinrichtung nach einem der vorhergehenden Ansprüche, **dadurch gekennzeichnet, daß** der Bildschirm eine DSTN-Zelle mit einer aktiven Flüssigkristallzelle (12) und mit einer passiven Flüssigkristallzelle (13; 42) aufweist, wobei die Heizvorrichtung (20) in der passiven Flüssigkristallzelle (13; 42) angeordnet ist.

18. Anzeigeeinrichtung nach Anspruch 17, **dadurch gekennzeichnet, daß** die passive Flüssigkristallzelle (42) eine Frontelektrode (43) und eine Rückelektrode (44) aufweist und daß die Front- und die Rückelektrode (43, 44) derart mit einer Spannung beaufschlagbar sind, daß auf dem Bildschirm entweder helle Zeichen vor dunklem Hintergrund oder dunkle Zeichen vor hellem Hintergrund darstellbar sind.

## Claims

1. Display device, in particular for a vehicle, with a viewing screen having a liquid crystal cell, the liquid crystal cell having a front cell wall and a rear cell wall and a liquid crystal substance arranged in the cell space between these cell walls, and with a heating device by means of which the display device can be heated, the heating device (11; 20; 28) being arranged in the cell space of the liquid crystal cell (1; 12, 13; 42) directly or indirectly on the front cell wall (2; 17; 39) and/or the rear (3; 18; 40) cell wall, the heating device (11; 20; 28) having an electrically conducting layer (9; 19), which is arranged in a plane with a front electrode (4) and/or a rear electrode (5) of the liquid crystal cell (1; 12), the electrode (31), in the plane of which the electrically conducting layer (9) is arranged, being in the shape of a strip, and elongated segments (35) of the electrically conducting layer (9) being arranged in interspaces (33) of the strips (34), **characterized in that** plated-through holes (36) connecting the plane of the front electrode (31) and the plane of the rear electrode (32) electrically interconnect the elongated segments (35) of the electrically conducting layer (9) by means of connecting sections (37), and **in that** the display device has an AC voltage source (47) which operates the heating device in the form of the electrically conducting layer (9), the AC voltage operating the heating device (11; 20; 28) having a DC voltage component of not more than 100 mV.

2. Display device according to Claim 1, **characterized in that** the liquid crystal cell (1; 12, 13; 42) is a TN cell or an STN cell.

3. Display device according to Claim 1 or 2, **characterized in that** the electrically conducting layer (9; 19) is arranged between a front electrode (4) and/or a rear electrode (5) of the liquid crystal cell (1; 12) and the front cell wall (2) and/or rear cell wall (3).

4. Display device according to one of Claims 1 to 3, **characterized in that** the electrically conducting layer (9; 19) extends in a meandering fashion.

5. Display device according to one of the preceding claims, **characterized in that** the electrically conducting layer (9; 19) has indium tin oxide.

6. Display device according to one of the preceding claims, **characterized in that** the electrically conducting layer (9) is covered with an electric insulating layer (10).

7. Display device according to Claim 6, **characterized in that** the insulating layer (10) has glass.

8. Display device according to one of the preceding claims, **characterized in that** the electrically conducting layer (9; 19) is optically transparent.

9. Display device according to one of the preceding claims, **characterized in that** the front cell wall (2; 17; 39) and/or the rear cell wall (3; 18; 40) is a glass plate.

10. Display device according to one of the preceding claims, **characterized in that** the heating device (11) is optically reflective.

11. Display device according to Claim 10, **characterized in that** the heating device (11) is a transflector which reflects light impinging on the front side (21) of the heating device (11) and transmits light impinging on the rear side (22).

12. Display device according to one of the preceding claims, **characterized in that** the viewing screen has two liquid crystal cells (12, 13) arranged in series.

13. Display device according to Claim 12, **characterized in that** the two liquid crystal cells (12, 13) are TN cells or STN cells.

14. Display device according to Claim 11 or 12, **characterized in that** each of the liquid crystal cells (12, 13) has a heating device (11, 20).

15. Display device according to one of the preceding claims, **characterized in that** the heating device (28) is arranged outside a display region (29) of the liquid crystal cell (1).

16. Display device according to one of the preceding claims, **characterized in that** a temperature sensor (30) is arranged in the cell space of the liquid crystal cell (1; 12, 13; 42).

17. Display device according to one of the preceding claims, **characterized in that** the viewing screen has a DSTN cell with an active liquid crystal cell (12) and with a passive liquid crystal cell (13; 42), the heating device (20) being arranged in the passive liquid crystal cell (13; 42).

18. Display device according to Claim 17, **characterized in that** the passive liquid crystal cell (42) has a front electrode (43) and a rear electrode (44), and **in that** it is possible to apply a voltage to the front electrode and the rear electrode (43, 44) in such a way that it is possible to display on the viewing screen either bright characters against a dark background or dark characters against a bright background.

## Revendications

1. Dispositif d'affichage, notamment pour un véhicule, comportant un écran avec une cellule à cristaux liquides, la cellule à cristaux liquides ayant une paroi avant et une paroi arrière et une substance à cristaux liquides placée dans l'espace inclus entre ces parois, et un système de chauffage au moyen duquel il est possible de chauffer le dispositif d'affichage, le système de chauffage (11; 20; 28) étant disposé dans l'espace intérieur de la cellule à cristaux liquides (1; 12, 13; 42) directement ou indirectement sur la paroi avant (2; 17; 39) et/ou sur la paroi arrière (3; 18; 40) de la cellule et le système de chauffage (11; 20; 28) ayant une couche (9; 19) conductrice de l'électricité qui est placée dans un plan avec une électrode avant (4) et/ou une électrode arrière (5) de la cellule à cristaux liquides (1; 12), l'électrode (31), dans le plan de laquelle se trouve la couche (9) conductrice de l'électricité, étant en forme de bandes et des portions allongées (35) de la couche (9) conductrice de l'électricité étant disposées dans les espaces (33) séparant les bandes (34), ledit dispositif d'affichage étant **caractérisé par le fait que** des métallisations (36) reliant le plan de l'électrode avant (31) et le plan de l'électrode arrière (32) relient électriquement l'une à l'autre les portions allongées (35) de la couche (9) conductrice de l'électricité au moyen de sections de liaison (37), que le dispositif d'affichage comporte une source de tension alternative (47), qui alimente le système de chauffage en forme de couche (9) conductrice de l'électricité, la tension alternative qui alimente le système de chauffage (11; 20; 28) ayant une composante continue de moins de 100 mV.

2. Dispositif d'affichage selon la revendication 1, **caractérisé par le fait que** la cellule à cristaux liquides (1; 12, 13; 42) est une cellule nématique en hélice (ou twisted-nematic en anglais) ou une cellule super-nématique en hélice.

3. Dispositif d'affichage selon la revendication 1 ou 2, **caractérisé par le fait que** la couche (9; 19) conductrice de l'électricité est placée entre une électrode avant (4) et/ou une électrode arrière (5) de la cellule à cristaux liquides (1 ; 12) et la paroi avant (2) et / ou la paroi arrière (3) de la cellule.

4. Dispositif d'affichage selon l'une des revendications 1 à 3, **caractérisé par le fait que** la couche (9; 19) conductrice de l'électricité a la forme d'un méandre.

5. Dispositif d'affichage selon l'une des revendications précédentes, **caractérisé par le fait que** la couche (9; 19) conductrice de l'électricité comporte un oxyde d'indium dopé à l'étain.

6. Dispositif d'affichage selon l'une des revendications précédentes, **caractérisé par le fait que** la couche (9) conductrice de l'électricité est recouverte par une couche (10) d'isolation électrique.

7. Dispositif d'affichage selon la revendication 6, **caractérisé par le fait que** la couche (10) d'isolation comporte du verre.

8. Dispositif d'affichage selon l'une des revendications précédentes, **caractérisé par le fait que** la couche (9; 19) conductrice de l'électricité est translucide.

9. Dispositif d'affichage selon l'une des revendications précédentes, **caractérisé par le fait que** la paroi avant (2; 17; 39) et/ou la paroi arrière (3; 18; 40) de la cellule sont des plaques de verre.

10. Dispositif d'affichage selon l'une des revendications précédentes, **caractérisé par le fait que** le système de chauffage (11) réfléchit la lumière.

11. Dispositif d'affichage selon la revendication 10, **caractérisé par le fait que** le système de chauffage (11) est une couche transflective qui réfléchit la lumière incidente sur le côté avant (21) du système de chauffage (11) et transmet la lumière incidente sur le côté arrière (22).

12. Dispositif d'affichage selon l'une des revendications précédentes, **caractérisé par le fait que** l'écran a deux cellules à cristaux liquides (12, 13) placées l'une derrière l'autre.

13. Dispositif d'affichage selon la revendication 12, **caractérisé par le fait que** les deux cellules à cristaux liquides (12, 13) sont des cellules nématiques en hélice (ou twisted-nematic en anglais) ou des cellules super-nématiques en hélice.

14. Dispositif d'affichage selon la revendication 11 ou 12, **caractérisé par le fait que** chaque cellule à cristaux liquides (12, 13) a un dispositif de chauffage (11, 20).

15. Dispositif d'affichage selon l'une des revendications précédentes, **caractérisé par le fait que** le dispositif de chauffage (28) est placé à l'extérieur d'une zone de représentation (29) de la cellule à cristaux liquides (1).

16. Dispositif d'affichage selon l'une des revendications précédentes, **caractérisé par le fait qu'**un détecteur de température (30) est placé dans l'espace intérieur de la cellule à cristaux liquides (1; 12, 13; 42).

17. Dispositif d'affichage selon l'une des revendications précédentes, **caractérisé par le fait que** l'écran comporte une cellule DSTN (pour Dual Scan Twisted Neumatic en anglais ou matrice passive de type double balayage) avec une cellule active à cristaux liquides (12) et une cellule passive à cristaux liquides (13; 42), le système de chauffage (20) étant placé dans la cellule passive à cristaux liquides (13; 42).

18. Dispositif d'affichage selon la revendication 17, **caractérisé par le fait que** la cellule passive à cristaux liquides (42) a une électrode avant (43) et une électrode arrière (44) et que l'électrode avant et l'électrode arrière (43, 44) peuvent être soumises à une tension de telle sorte que, sur l'écran, ou bien des signes clairs peuvent être représentés sur un arrière-plan sombre ou bien des signes sombres peuvent être représentés sur un arrière-plan clair.
